# EUROPÄISCHE PATENTSCHRIFT

(11) **EP 3 283 253 B1**
(45) Veröffentlichungstag und Bekanntmachung des Hinweises auf die Patenterteilung: **18.08.2021**
(21) Anmeldenummer: 16721088.9
(22) Anmeldetag: 15.04.2016
(51) Int. Cl.: B23K 20/12, F16B 5/08

(54) **VERBINDUNGSELEMENT ZUR FORMSCHLÜSSIGEN VERBINDUNG MIT WENIGSTENS EINEM BAUTEIL**
CONNECTION ELEMENT FOR AN INTERLOCKING CONNECTION TO AT LEAST ONE COMPONENT
ÉLÉMENT D'ASSEMBLAGE DESTINÉ À ÊTRE ASSEMBLÉ PAR COMPLÉMENTARITÉ DE FORME À UN ÉLÉMENT STRUCTURAL

(30) Priorität: 17.04.2015 DE 102015207052
(43) Veröffentlichungstag der Anmeldung: 21.02.2018
(73) Patentinhaber: EJOT GmbH & Co. KG, 57319 Bad Berleburg (DE)
(72) Erfinder: BRANDAU, Hannes, 99897 Tambach-Dietharz (DE); PINZL, Wilfried, 99897 Tambach-Dietharz (DE); THIEM, Jörg, 98544 Zella-Mehlis (DE)
(74) Vertreter: Puschmann Borchert Kaiser Klettner Patentanwälte Partnerschaft mbB
(86) Internationale Anmeldenummer: PCT/EP2016/058416
(87) Internationale Veröffentlichungsnummer: WO 2016/166328

(56) Entgegenhaltungen:
- DE-A1-102008 031 121
- US-A- 4 555 838

## Beschreibung

Die Erfindung betrifft ein Verbindungselement gemäß dem Oberbegriff des Anspruches 1.

Die WO 2008/058625 A1 offenbart ein Verbindungselement zur Herstellung einer formschlüssigen Verbindung mit wenigstens einem Bauteil, wobei dieses eine Reibschweißverbindung mit einer zweiten Platte eingeht, um eine erste Platte zwischen dem Kopf des Verbindungselements und der zweiten Platte festzulegen.

Das Verbindungselement weist einen Verbindungskörper auf, der einen hohlzylindrischen Schaft mit einer Ringschneide aufweist, um unter Rotation und Druck das festhaltende Bauteil zu durchdringen.

Durch die Kombination des hohlzylindrischen Schafts mit der stirnseitigen Ringschneide kann Material innerhalb des hohlzylindrischen Teils aufgenommen werden.

Diese Art der Ausgestaltung hat den Nachteil, dass insbesondere bei Verbindung von Faserverbundkunststoffen Späne, die während des Durchdringungsvorgangs entstehen, die Reibschweißstelle an der zweiten Platte verunreinigen.

Es ist Aufgabe der Erfindung, ein Verbindungselement sowie ein Befestigungselement anzugeben, die eine Bauteilverbindung aus einem Verbindungselement und einem Befestigungselement und wenigstens einem Bauteil, insbesondere ein Faserverbundkunststoffbauteil, das zwischen Verbindungselement und Befestigungselement formschlüssig gehalten ist, in verbesserter Weise zu ermöglichen.

Die Aufgabe für das Verbindungselement wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

Gemäß einem ersten Aspekt der Erfindung weist ein Verbindungselement zur formschlüssigen Verbindung mit wenigstens einem Bauteil unter Verwendung eines Befestigungselements, mit dem das Verbindungselement eine Reibschweißverbindung eingeht, in bekannter Weise einen Kopf mit einem Antrieb und einen Schaft auf.

Der Schaft weist an seiner Stirnseite wenigstens zwei Schneidstrukturen auf, wobei die Schneidstrukturen Schneidkanten aufweisen, die in einer Schneidebene liegen. Der Schaft ist an seiner Stirnseite von der Schneidebene begrenzt. Die Schneidstrukturen sind in Umfangsrichtung zueinander beabstandet und definieren einen Schneiddurchmesser, der bei Drehung des Verbindungselements in ein Bauteil eingebracht wird.

Erfindungsgemäß ist vorgesehen, dass der Schaft einen Bereich mit einem Querschnitt aufweist, der in Umfangsrichtung zwischen den Schneidstrukturen eine gegenüber dem Schneiddurchmesser verringerte Ausdehnung hat. Der Bereich der verringerten Ausdehnung liegt also in einem Kreissektor zwischen den durch die umfängliche Ausdehnung der Schneidstrukturen definierten Sektoren.

Durch eine entsprechende Gestaltung werden während des Eindrehvorgangs entstehende Späne in axialer Richtung entgegen der Eintreibrichtung abgeführt. Dies sorgt dafür, dass Späne bereits vor Herstellung einer Reibschweißverbindung abgeführt werden können, wodurch diese den Verbindungsvorgang nicht mehr negativ beeinflussen können. Wird das Verbindungselement zur Verbindung zweier Faserverbundkunststoffplatten eingesetzt, führt dies dazu, dass auch ein Eindrücken der Späne zwischen die Kunststoffplatten während des Bohrvorgangs vermieden wird.

Vorzugsweise erstreckt sich der Bereich der verringerten Ausdehnung in Axialrichtung wenigstens mit der Länge des Schneiddurchmessers von der Schneidstruktur in Richtung des Kopfes. Auf diese Weise kann eine sichere Ausbringung der Späne während des Bohrvorgangs gewährleistet werden.

Gemäß einer weiteren vorteilhaften Ausgestaltung kann die maximale radiale Ausdehnung der Schneidstruktur in der Schneidebene maximal 25%, insbesondere maximal 20%, des Schneiddurchmessers betragen. Dadurch entsteht innerhalb der Schneidstrukturen ein Hohlraum, der ein Eindringen der Schneidstrukturen in das zu schneidende Bauteil ermöglicht. Bevorzugt kann dazu der Mittelpunkt der Stirnseite des Schaftes bis zu 50% des Schneiddurchmessers von der Schneidebene beabstandet sein. Dadurch wird ein ausreichend großer Freiraum für das Eindringen der Schneidstrukturen geschaffen und dennoch ein idealer Abtransport der Späne aus dem Bauteil gewährleistet.

Insbesondere weist der Schaft einen Bereich mit einer Querschnittsfläche von wenigstens 60% der durch den Schneiddurchmesser festgelegten Fläche auf. Dadurch ist ein Verhältnis von verringerter Ausdehnung zum Schneiddurchmesser gegeben, der eine für die Reibschweißverbindung ausreichend große Verbindungsfläche bereitstellt und dennoch einen Abtransport der beim Schneidbohrvorgang entstehenden Späne ermöglicht.

Gemäß einer weiteren vorteilhaften Ausgestaltung sind höchstens fünf Schneidstrukturen vorgesehen. Dadurch kann auch bei geringen Schneiddurchmessern ein ausreichend großer Schneidstrukturabstand gewährleistet werden, so dass sich auch bei geringen Schneiddurchmessern ein sinnvoller Bereich verringerter Ausdehnung zwischen den Schneidstrukturen einfügen kann.

Der Bereich der verringerten Ausdehnung kann erfolgen, indem in einen zylindrischen Schaft mit dem Schneiddurchmesser Ausnehmungen, insbesondere in Form von Nuten, eingebracht werden. Alternativ kann aber auch der Schaft selbst einen polygonen Querschnitt aufweisen, wobei die Schneidstrukturen dann in den Eckbereichen angeordnet sind, wodurch der Außenkreis des Polygons dem Schneiddurchmesser entspricht.

Bevorzugt ist der Schaft aus einem Vollmaterial gebildet. Der Schaft kann einen Durchmesser von weniger als 2,5 mm aufweisen. Dies hat den Vorteil, dass die Matrix des Faserverbundwerkstoffs möglichst wenig geschädigt wird. Das Verbindungselement kann vorteilhafter Weise dünn ausgeführt sein, wozu die Schaftlänge insbesondere mehr als das Anderthalbfache des Schneiddurchmessers beträgt.

Gemäß einer weiteren Ausführungsform kann vorgesehen sein, dass der Bereich der verringerten Ausdehnung sich in Richtung des Kopfes stetig dem Schneiddurchmesser annähert. Dies hat zur Folge, dass eine größtmögliche Querschnittsanbindung vom Kopf an einen Schaft erfolgt, was die Übertragung hoher Drehmomente erlaubt, ohne dass der Kopf vom Schaft abgedreht wird.

Ferner ist ein Befestigungselement zur formschlüssigen Verbindung mit wenigstens einem Bauteil vorgesehen, indem das Befestigungselement eine Reibschweißverbindung mit einem wenigstens ein Bauteil durchsetzenden Verbindungselement eingeht.

Das Befestigungselement weist einen umlaufenden Randbereich zur Anlage an einen Bauteilverbund auf, wobei der Randbereich mit seiner Stirnfläche eine Anlageebene definiert.

Bevorzugt ist vorgesehen, dass der Randbereich in Richtung nach innen in einen Ablagebereich übergeht, wobei der Ablagebereich in Normalen-Richtung zur Anlageebene beabstandet ist. Ferner weist das Befestigungselement einen Schweißbereich innenliegend zum Ablagebereich auf. Der Schweißbereich ist gegenüber dem Ablagebereich in Richtung der Anlageebene erhoben, wobei der Schweißbereich zur Anlageebene beabstandet ist und somit nicht bis an die Anlageebene heranreicht.

Eine solche Ausgestaltung des Befestigungselements hat den Vorteil, dass für den Fall, dass das Verbindungselement, das wenigstens ein Bauteil spanend durchdringt, aus der untersten Lage herausfallende Späne vom Schweißbereich in den Ablagebereich abgeführt werden können. Dadurch wird die Qualität der Schweißverbindung zwischen Verbindungselement und Befestigungselement erheblich verbessert, da störende Späne aus dem Schweißbereich abgeführt werden.

Insbesondere ist der Ablagebereich umlaufend ausgebildet und schließt auf diese Weise den Schweißbereich vollständig ein. Entsprechend können auf den Schweißbereich auftreffende Späne in alle Richtungen abgeführt werden. Dies wirkt sich insbesondere durch die auf die mit Zentrifugalkraft beaufschlagten Späne aus.

Gemäß einer weiteren bevorzugten Ausgestaltung weist das Befestigungselement eine Drehsicherung auf, die es ermöglicht, das Befestigungselement in Drehrichtung festzuhalten. Vorzugsweise ist diese Drehsicherung in Form eines üblichen Schraubenantriebs, insbesondere eines Außenantriebs, wie beispielsweise einem Sechskantantrieb ausgebildet. Dadurch kann ein Mitdrehen des Befestigungselements während des Reibschweißvorgangs verhindert werden oder sogar selbst eine Drehung herbeigeführt werden, die der Drehung des Verbindungselements entgegengesetzt ist.

Eine solche Gestaltung kann auch genutzt werden, um bei Bedarf ein Drehmoment auf das Befestigungselement auszuüben, das einer auf das Verbindungselement ausgeübten Drehung entgegengesetzt ist, um auf diese Weise eine Abscherung der stoffschlüssigen Verbindung aus Verbindungselement und Befestigungselement zu erreichen. Auf diese Weise können zwischen Verbindungselement und Befestigungselement befestigte Bauteile wieder gelöst werden.

Gemäß einer weiteren bevorzugten Ausgestaltung weist der Schweißbereich eine konvexe, kegelartige oder kegelstumpfartige Geometrie auf. Dies hat zur Folge, dass eine Spanabführung aus dem Schweißbereich heraus ermöglicht wird. Dennoch ist eine ausreichend große Anlagefläche zur Herstellung einer Reibschweißverbindung gegeben.

Bevorzugt kann das Befestigungselement innerhalb seines Randbereichs rotationsymmetrisch ausgeführt sein, wobei insbesondere der Ablagebereich und der Schweißbereich koaxial angeordnet sind. Dies erleichtert die Herstellung des Befestigungselements.

In vorteilhafter Weise kann der Bereich der größten Ausdehnung des Schweißbereichs größer als 1,5 mm, insbesondere größer als 2,0 mm, sein. Dies sorgt für eine ausreichend große Schweißzone, um eine feste Verbindung zwischen einem Befestigungselement und einem Verbindungselement herzustellen. Dies liegt insbesondere dann vor, wenn das Verbindungselement einen Schneiddurchmesser von höchstens 2,5 mm aufweist.

Gemäß einer weiteren Ausführungsform kann der Abstand des Schweißbereichs zur Anlageebene größer als 1,0 mm sein. Dadurch wird gewährleistet, dass ausreichend freies Volumen zwischen dem zu verbindenden Bauteil und dem Befestigungselement zur Verfügung steht, um ein Abgleiten der Späne in den Ablagebereich zu gewährleisten.

Um eine kompakte Ausgestaltung zu ermöglichen, kann die radiale Ausdehnung des Ablagebereichs einen Durchmesser von weniger als 5,0 mm haben.

Gemäß einer weiteren vorteilhaften Ausgestaltung kann vorgesehen sein, dass der Randbereich so gestaltet ist, dass dieser einen Hinterschnitt zum Ablagebereich bildet. Dies hat zur Folge, dass ein Verbindungselement mit seinem am Befestigungselement umgeformten Schaft mit diesem nicht nur einen Stoffschluss, sondern auch einen Formschluss in axialer Richtung über den Hinterschnitt eingeht.

In einem weiteren Aspekt betrifft die Erfindung ein Verbindungssystem zur Verbindung mehrerer Fügelagen, insbesondere Lagen aus Faserverbundkunststoff, umfassend ein zuvor beschriebenes Verbindungselement und ein zuvor beschriebenes Befestigungselement, wobei das Verbindungselement nach selbstlochendem Durchdringen der Fügelagen mit dem Befestigungselement verschweißbar ist.

Vorzugsweise kann das Verbindungssystem derart ausgebildet sein, dass der Durchmesser des Schweißbereichs des Befestigungselements 25% größer als der Schneiddurchmesser des Verbindungselements ist.

Gemäß einer weiteren vorteilhaften Ausgestaltung des Verbindungssystems können der Schweißbereich des Befestigungselements und die Stirnseite des Schafts des Verbindungselements eine korrespondierende Gestaltung aufweisen. So kann beispielsweise ein konvex gestalteter Schweißbereich auf eine konkav gestaltete Stirnseite des Schafts des Verbindungselements abgestimmt sein. Dies sorgt für eine maximale Anlagefläche und ein entsprechend schnelles Erwärmen an der Reibschweißverbindungsstelle.

Des Weiteren betrifft die Erfindung eine Bauteilverbindung umfassend wenigstens zwei Fügelagen mit einem Verbindungselement mit einem Kopf und einem Schaft, wobei der Schaft die Fügelagen in einer Eintreibrichtung durchsetzt und eine Reibschweißverbindung mit einem Befestigungselement herstellt, wobei das Befestigungselement an der dem Kopf des Verbindungselements abgewandten Seite der Fügelage anliegt und mit dieser einen Hohlraum bildet, in welchem Späne wenigstens einer Fügelage eingeschlossen sind, wobei die Fügelagen formschlüssig zwischen Kopf und Befestigungselement zusammengehalten sind.

Die Fügelagen aus insbesondere Faserverbundkunststoff können auf diese Weise fest und mit geringer Beschädigung der Faserstruktur zwischen Verbindungselement und Befestigungselement verbunden werden.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1A: eine perspektivische Ansicht eines erfindungsgemäßen Verbindungselements;
- Fig. 1B: eine perspektivische Ansicht eines erfindungsgemäßen Befestigungselements;
- Fig. 1C: eine perspektivische Ansicht eines erfindungsgemäßen Verbindungselements;
- Fig. 1D: eine perspektivische Ansicht eines erfindungsgemäßen Befestigungselements;
- Fig. 2A: eine Vorderansicht eines erfindungsgemäßen Verbindungselements;
- Fig. 2B: einen Längsschnitt durch ein Verbindungselement gemäß Fig. 2A;
- Fig. 2C: einen Querschnitt durch den Schaft eines Verbindungselements gemäß Fig. 2A;
- Fig. 3A: die Draufsicht auf ein erfindungsgemäßes Befestigungselement gemäß Fig.1 B;
- Fig. 3B: die Schnittansicht eines erfindungsgemäßen Befestigungselements gemäß Fig. 3A;
- Fig. 4A: die Vorderansicht eines erfindungsgemäßen Verbindungselements gemäß Fig. 1C;
- Fig. 4B: einen Längsschnitt durch ein Verbindungselement gemäß Fig. 2A;
- Fig. 4C: einen Querschnitt durch den Schaft eines Verbindungselements gemäß Fig. 2A;
- Fig. 5A: eine Draufsicht auf ein erfindungsgemäßes Befestigungselement gemäß Fig. 1 D;
- Fig. 5B: eine Schnittansicht eines erfindungsgemäßen Befestigungselements gemäß Fig. 5A;
- Fig. 6: eine perspektivische Ansicht eines erfindungsgemäßen Verbindungselements;
- Fig. 7: eine Schnittansicht einer weiteren erfindungsgemäßen Ausgestaltung eines Befestigungselements;
- Fig. 8: eine Teilschnittansicht einer erfindungsgemäßen Bauteilverbindung, und

- Fig. 9: eine Schnittansicht einer erfindungsgemäßen Bauteilverbindung.

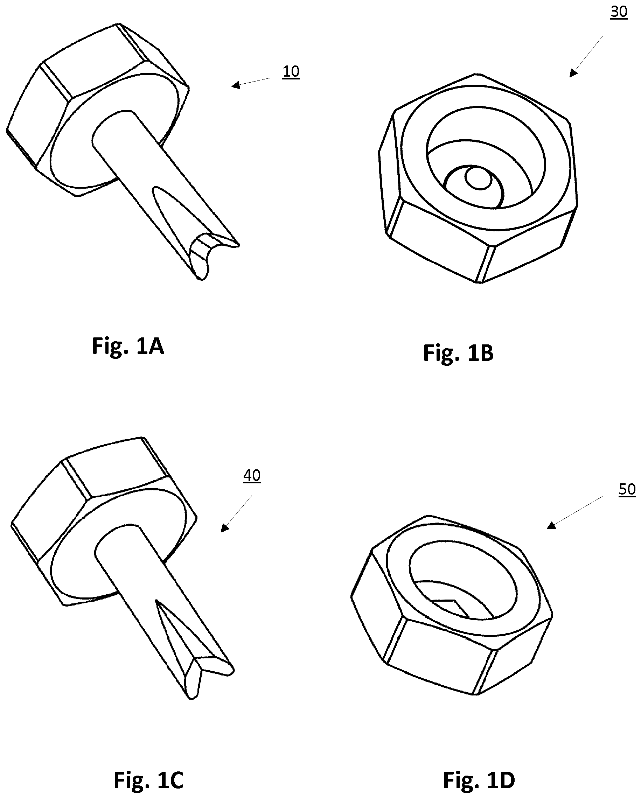

Fig. 1A zeigt eine perspektivische Ansicht eines erfindungsgemäßen Verbindungselements 10. Fig. 1B zeigt ein zum Verbindungselement 10 der Fig. 1A korrespondierendes Befestigungselement 30, mit dem das Verbindungselement nach Durchdringen einer Befestigungsstruktur mit wenigstens einem Bauteil in einem Reibschweißprozess stoffschlüssig verbunden wird. Das in Fig. 1A dargestellte Verbindungselement 10 und das in Fig. 1B dargestellte Befestigungselement 30 bilden gemeinsam ein Verbindungssystem.

Fig. 1C zeigt eine perspektivische Ansicht einer weiteren Ausführungsform eines erfindungsgemäßen Verbindungselements 40. Fig. 1D zeigt eine perspektivische Ansicht eines erfindungsgemäßen Befestigungselements 50. Das Verbindungselement 40 und das Befestigungselement 50 sind derart aufeinander abgestimmt, dass sich eine möglichst große Reibfläche an der Kontaktstelle der Elemente ergibt.

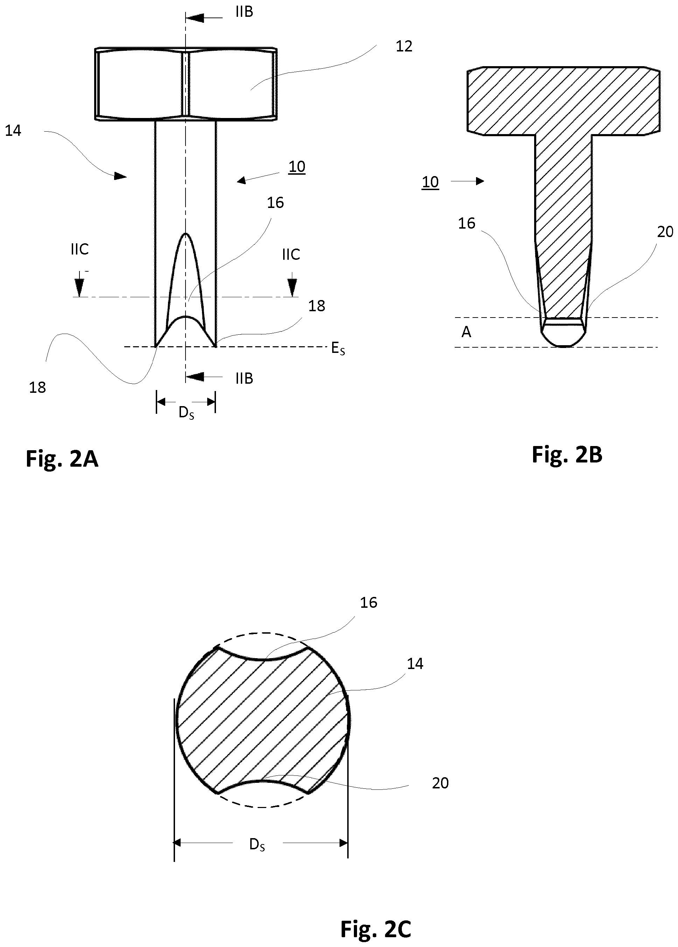

Fig. 2A zeigt eine Vorderansicht eines erfindungsgemäßen Verbindungselements 10 zur Herstellung einer Reibschweißverbindung mit einem Befestigungselement, insbesondere gemäß Fig. 1B, damit eine Befestigungsstruktur zwischen einem Kopf 12 des Verbindungselements 10 und dem Befestigungselement gehalten werden kann. Das Verbindungselement 10 weist einen zylindrischen Schaft 14 auf, der an seiner Stirnseite in einer Schneidebene E_{S} endet, in der zwei Schneidkanten 18 liegen. Die Schneidkanten definieren einen Schneiddurchmesser Ds, mit dem eine spanende Lochformung in der Befestigungsstruktur erfolgen kann.

Der Schaft 14 weist ausgehend von der Schneidebene Es in Richtung des Kopfes 12 eine Kehlung 16 auf. Zudem ist eine der Kehlung 16 gegenüberliegende Kehlung (siehe Fig. 2B) vorgesehen, wodurch im Bereich der Kehlungen 16 ein Bereich verringerten Querschnitts gegenüber dem Schneiddurchmesser Ds entsteht. Dies ist in Fig. 2C näher verdeutlicht. Die durch die Schneidkanten 18 von der Befestigungsstruktur abgetragenen Späne werden durch die Rotation des Verbindungselements 10 in den Kehlungen 16 in axialer Richtung von der Schneidebene Es in Richtung des Kopfes 12 weggefördert und werden auf diese Weise entgegen der Bohrrichtung aus der Befestigungsstruktur herausgefördert.

Die Einbringung der Kehlungen 16, 20 lässt in einem Arbeitsschritt auch die an der Stirnseite des Schaftes 14 liegenden Schneidstrukturen 18 entstehen.

Zwischen den Schneidkanten ist eine Ausnehmung vorgesehen. Diese Ausnehmung führt zu einer Beabstandung des Mittelpunkts des Schaftendes zur Schneidebene Es von etwa der Hälfte des Schneiddurchmessers Ds. Dadurch wird ein zuverlässiges Eindringen der Schneidkanten 18 in die Befestigungsstruktur gewährleistet.

Fig. 2B zeigt einen Längsschnitt IIB-IIB mit im Bereich des Schaftendes angeordneten gegenüberliegenden Kehlungen 16, 20. Die Tiefe der Kehlungen 16, 20 nimmt stetig mit einer geringen Steigung in Richtung des Kopfes 12 ab. Zudem ist der Abstand A des Schnittpunkts der Stirnfläche des Schaftes mit der Mittelachse von der Schneidebene Es dargestellt. Dieser beträgt 50% des Schneiddurchmessers D_{S}.

Fig. 2C zeigt einen Querschnitt IIC-IIC durch den Schaft 14, wobei der zylindrische Schaft 14 den Schneiddurchmesser Ds aufweist. Weiter ist gut zu erkennen, wie die durch die Kehlung 16, 20 verursachten Bereiche verringerter Ausdehnung gestaltet sind. Durch diese in axialer Richtung verlaufenden Ausnehmungen werden die an der Schneidkante erzeugten Späne in axialer Richtung entgegen der Bohrrichtung abgeführt.

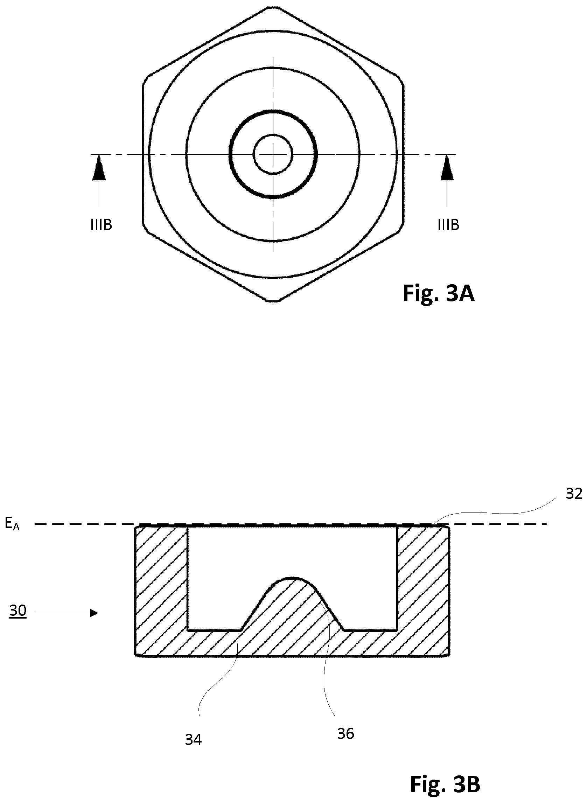

Fig. 3A zeigt die Draufsicht eines zum Verbindungselement 10 korrespondierend ausgestalteten erfindungsgemäßen Befestigungselements 30 gemäß Fig. 1B.

Fig. 3B zeigt die Schnittansicht IIIB-IIIB aus Fig. 3A eines erfindungsgemäßen rotationssymmetrischen Befestigungselements 30, das zur Befestigung eines Verbindungselements 10, wie in den Fig. 2A bis 2C beschrieben, vorgesehen ist. Das Befestigungselement 30 weist eine sechskantige Außenkontur auf, wobei der Randbereich 32 eine Anlageebene E_{A} definiert.

Zu dem Randbereich ist innenliegend ein Aufnahmebereich 34 vorgesehen, der zur Anlageebene E_{A} beabstandet ist. Gemäß der in Fig. 1C dargestellten Ausführungsform ist der Aufnahmebereich 34 ringförmig ausgebildet. Innerhalb dieses ringförmigen Aufnahmebereichs 34 ist ein Schweißbereich 36 vorgesehen, der gegenüber dem Niveau des Aufnahmebereichs 34 in Richtung der Anlageebene E_{A} erhaben ist. Der Schweißbereich 36 ist kalottenartig konvex ausgebildet, wobei die Krümmungen der Stirnseite des Verbindungselements 10 (Fig. 1A) und des Schweißbereichs 36 aneinander angepasst sind. Dies sorgt zum einen für eine möglichst große Anlagefläche zwischen den durch einen Reibschweißvorgang zu verbindenden Fügepartnern. Zum anderen begünstigt die kalottenartige Erhebung das Abgleiten von in das Befestigungselement hineinfallenden Spänen unter Rotation des Verbindungselements 10. Auf diese Weise wird gewährleistet, dass keine die Reibschweißverbindung zwischen Verbindungselement und Befestigungselement 30 negativ beeinflussenden Späne in der Fügezone verbleiben.

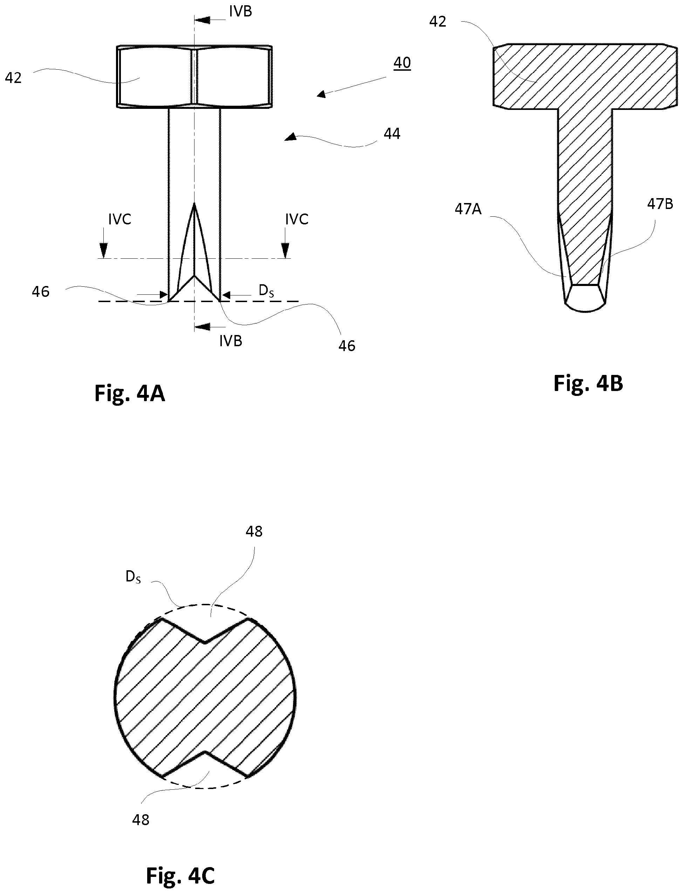

Fig. 4A zeigt die Vorderansicht einer weiteren erfindungsgemäßen Ausgestaltung eines Verbindungselements 40 umfassend einen Kopf 42 und einen Schaft 44. Auch die Ausgestaltung gemäß Fig. 2A weist am stirnseitigen Ende des Schaftes 44 Schneidkanten 46 auf, die zur spanenden Lochformung geeignet sind. Im Unterschied zu Fig. 1A sind die Ausnehmungen 47A keilförmig in den zylindrischen Schaft 44, insbesondere durch Kneifen, eingebracht. Wie in Fig. 1A erstreckt sich auch gemäß dieser Ausgestaltung die Ausnehmung in axialer Richtung ausgehend von der Schneidebene über eine Länge in Richtung des Kopfes, die größer ist als der Schneiddurchmesser Ds.

Fig. 4B zeigt eine Schnittansicht IVB-IVB der Fig. 4A: Diese Schnittansicht zeigt den Verlauf der Ausnehmungen 47A, 47B. Die Ausdehnung des Querschnitts im Bereich der verringerten Ausdehnung nimmt in Richtung des Kopfes zunehmend ab. Die Tiefe der Ausnehmung verringert sich in Richtung des Kopfes 42, bis der vollständige Schaftquerschnitt hergestellt ist.

Fig. 4C zeigt einen Querschnitt des Schaftes 44 an der Schnittlinie IVC-IVC der Fig. 4A, wobei sich Bereiche geringerer Ausdehnung 48 gegenüber dem Schneiddurchmesser Ds ergeben. Die in den Fig. 2A und 2B beschriebene keilförmige Ausnehmung hat den Vorzug einer besonders einfachen Herstellbarkeit, wobei dennoch zuverlässig die Späne aus dem Schneidbereich abgeführt werden können.

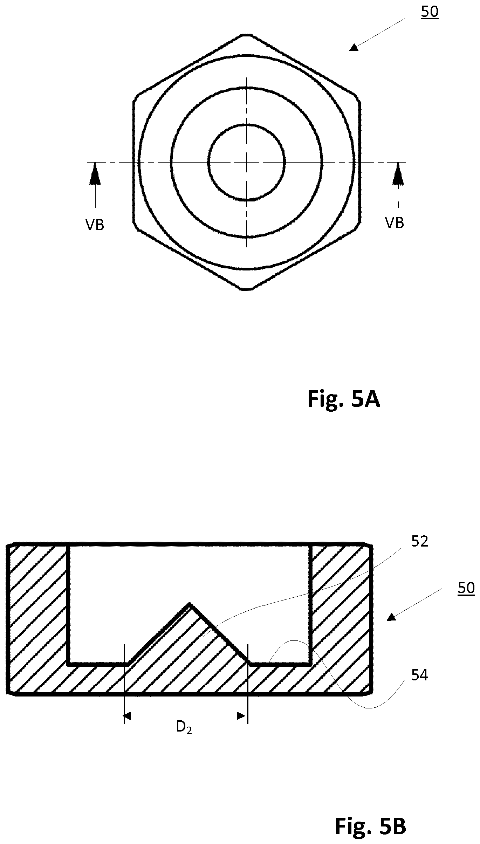

Fig. 5A zeigt die Draufsicht eines zum Verbindungselement 40 korrespondierend ausgestalteten erfindungsgemäßen Befestigungselements 50 gemäß Fig. 1D.

Fig. 5B zeigt eine Schnittansicht VB-VB gemäß Fig. 5A. Im Unterschied zu dem in Fig. 1C dargestellten Befestigungselement, ist der Schweißbereich 52 kegelförmig ausgestaltet. Auch diese Geometrie ermöglicht ein zuverlässiges Abgleiten der beim Durchdringungsvorgang entstehenden Späne in den Aufnahmebereich 54. Zudem gewährleistet diese Ausgestaltung eine größtmögliche Reibfläche für ein gemäß Fig. 2A gestaltetes Verbindungselement 40. Der Schweißdurchmesser D₂ des Befestigungselements 50 entspricht etwa dem Schneiddurchmesser Ds des Verbindungselements 40. Dadurch wird eine ideale Fügezone bereitgestellt und ein schnelles Aufschmelzen der Fügepartner 40, 50 gewährleistet.

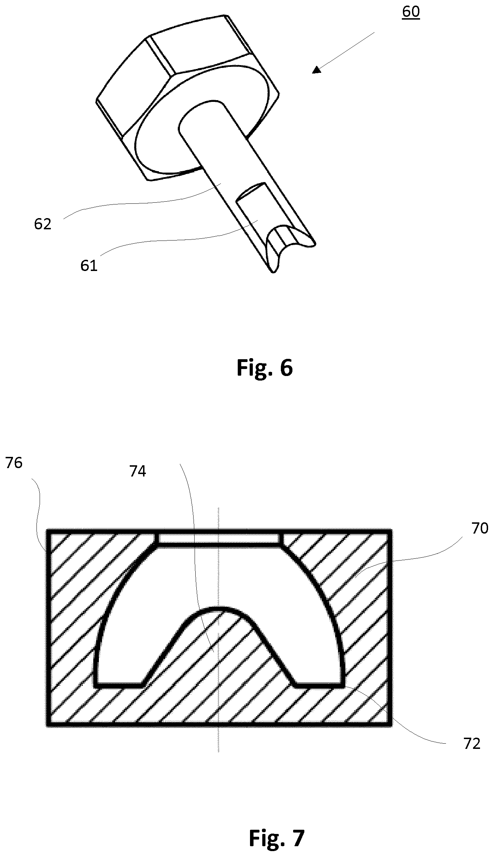

Fig. 6 zeigt eine perspektivische Ansicht eines erfindungsgemäßen Verbindungselements 60, wobei der Bereich verringerter Ausdehnung durch das Einbringen einer Nut 61 in den zylindrischen Schaft 62 des Verbindungselements 60 hergestellt ist. Die Nut 61 verläuft in ihrem Grund parallel zur Achse des Verbindungselements 60 und springt an ihrem dem Kopf zugewandten Ende auf das Mantelniveau des Schafts 62.

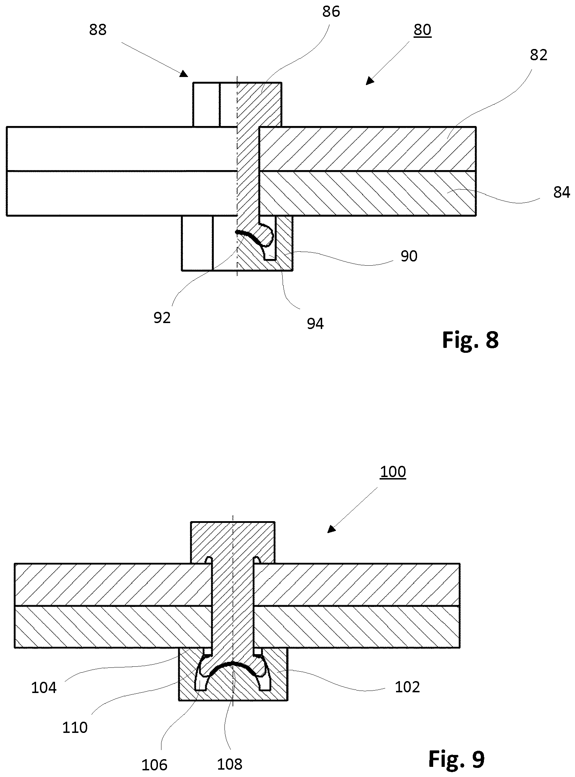

Fig. 7 zeigt eine Schnittansicht einer weiteren erfindungsgemäßen Ausgestaltung eines Befestigungselements 70, wobei das Befestigungselement 70 einen ringförmigen Aufnahmebereich 72 aufweist, innerhalb dessen ein halbkugelförmiger Schweißbereich 74 liegt. Der Anlagebereich 76 ist in seiner radialen Ausdehnung derart gestaltet, dass dieser den Aufnahmebereich 72 in Radialrichtung wenigstens teilweise überragt und dadurch einen Hinterschnitt bildet. Dies hat den Vorteil, dass sich durch das Aufschmelzen der Fügepartner eine Verbreiterung des Schweißwulstes ergibt, wodurch gemäß der Ausgestaltung analog Fig. 9 neben der stoffschlüssigen Verbindung auch ein zusätzlicher Formschluss vorliegt.

Fig. 8 zeigt eine Teilschnittansicht einer erfindungsgemäßen Bauteilverbindung 80 umfassend eine erste Fügelage 82 und eine zweite Fügelage 84. Beide Fügelagen 82, 84 bestehen aus einem faserverstärkten Kunststoff. Beide Fügelagen sind erfindungsgemäß zusammengehalten, indem ein Formschluss zwischen dem Kopf 86 eines Verbindungselements 88 und einem Befestigungselement 90 bereitgestellt wird. Die Verbindung zwischen Verbindungselement 88 und Befestigungselement 90 entsteht durch Herstellung einer Reibschweißverbindung zwischen Verbindungselement 88 und Befestigungselement 90 an der Fügezone 92, wo der Schaft des Verbindungselements 88 nach spanender Durchdringung der Fügelagen 82, 84, wie zuvor beschrieben, festgelegt wird. Während des spanenden Lochformvorgangs werden aufgrund der eingangs erwähnten Geometrie des Verbindungselements 88 entstehende Späne so lange aus dem Fügelagenverbund abgeführt, solange der Schaft mit dem Bereich seiner Nut aus der obersten Fügelage 82 herausragt. Da jedoch nicht alle Späne entgegen der Bohrrichtung abgeführt werden können, werden die übrigen verbleibenden Späne im Ablagebereich 94 des Befestigungselements 90 aufgenommen. Die dort gelagerten Späne beeinträchtigen die Reibschweißverbindung somit nicht negativ. Auf diese Weise kann trotz eines vorzugsweise geringen Durchmessers des Schaftes eine hohe Verbindungsfestigkeit gewährleistet werden. Wie der Teilschnittansicht aus Fig. 5 zu entnehmen ist, weisen sowohl das Verbindungselement 88 als auch das Befestigungselement 90 einen Außenantrieb in Form einer Sechskantgeometrie auf. Dies stellt eine gängige Antriebsform dar.

Fig. 9 zeigt eine Schnittansicht einer erfindungsgemäßen Bauteilverbindung 100 analog Fig. 8, wobei das Befestigungselement 102 gemäß der Ausführung von Fig. 7 dargestellt ist. An dieser Schnittansicht ist gut zu erkennen, dass der Anlagebereich 104 den Aufnahmebereich 106 des Befestigungselements 102 in radialer Richtung ein Stück weit überragt. Durch den gebildeten Reibschweißwulst 110 wird hier ein Formschluss zusätzlich zum Stoffschluss an der Fügezone 108 bereitgestellt.

## Patentansprüche

1. Verbindungselement (10, 40, 60, 88) zur formschlüssigen Verbindung mit wenigstens einem Bauteil, wobei das wenigstens eine Bauteil zwischen Verbindungselement (10, 40, 60, 88) und einem Befestigungselement (30, 50, 70, 90, 102) gehalten ist und das Verbindungselement (10, 40, 60, 88) und das Befestigungselement (30, 50, 70, 90, 102) eine Reibschweißverbindung eingehen, aufweisend einen Kopf (12, 42, 86) mit einem Antrieb und einen Schaft (14, 44, 62), wobei der Schaft (14, 44, 62) an seiner Stirnseite wenigstens zwei Schneidstrukturen (18) aufweist, wobei die Schneidstrukturen (18) Schneidkanten (46) aufweisen, die in einer Schneidebene liegen, wobei die Schneidebene den Schaft (14, 44, 62) begrenzt, wobei ferner die Schneidstrukturen (18) in Umfangsrichtung beabstandet sind und einen Schneiddurchmesser definieren, **dadurch gekennzeichnet, dass** ferner der Schaft (14, 44, 62) einen Querschnitt aufweist, der zwischen den Schneidstrukturen (18) eine gegenüber dem Schneiddurchmesser verringerte Ausdehnung hat, wobei sich der Bereich der verringerten Ausdehnung in Axialrichtung wenigstens mit der Länge des Schneiddurchmessers von den Schneidstrukturen (18) in Richtung des Kopfes (12, 42, 86) erstreckt.

2. Verbindungselement nach Anspruch 1, **dadurch gekennzeichnet, dass** die maximale radiale Ausdehnung der Schneidstrukturen (18) in der Schneidebene maximal 25%, insbesondere maximal 20%, des Schneiddurchmessers Ds beträgt.

3. Verbindungselement nach einem der vorangehenden Ansprüche, **dadurch gekennzeichnet, dass** der Schaft (14, 44, 62) eine Querschnittsfläche von wenigstens 60% von der durch den Schneiddurchmesser Ds festgelegten Fläche aufweist.

4. Verbindungselement nach einem der vorangehenden Ansprüche, **dadurch gekennzeichnet, dass** höchstens fünf Schneidstrukturen (18) vorgesehen sind.

5. Verbindungselement nach einem der vorangehenden Ansprüche, **dadurch gekennzeichnet, dass** der Mittelpunkt der Stirnseite des Schaftes (14, 44, 62) mit höchstens 50% des Schneiddurchmessers zur Schneidebene in Richtung des Kopfes (12, 42, 86) beabstandet ist.

6. Verbindungselement nach einem der vorangehenden Ansprüche, **dadurch gekennzeichnet, dass** der Bereich der verringerten Ausdehnung durch Einbringung von Ausnehmungen, insbesondere Nuten, in den Schaft erzeugt wird.

7. Verbindungselement nach einem der vorangehenden Ansprüche, **dadurch gekennzeichnet, dass** der Schaft (14, 44, 62) zylindrisch ist.

8. Verbindungselement nach einem der vorangehenden Ansprüche, **dadurch gekennzeichnet, dass** der Schneiddurchmesser ≤ 2,5 mm ist.

9. Verbindungselement nach einem der vorangehenden Ansprüche, **dadurch gekennzeichnet, dass** sich die verringerte Ausdehnung in Richtung des Kopfes (12, 42, 86) stetig reduziert.

10. Bauteilverbindung (80, 100) umfassend wenigstens zwei Fügelagen (82, 84) mit einem Verbindungselement mit einem Kopf (12, 42, 86) und einem Schaft (14, 44, 62), wobei der Schaft (14, 44, 62) die Fügelagen (82, 84) in einer Eintreibrichtung durchsetzt und eine Reibschweißverbindung mit einem Befestigungselement (30, 50, 70, 90, 102) herstellt, wobei das Befestigungselement (30, 50, 70, 90, 102) an der dem Kopf (12, 42, 86) des Verbindungselements (10, 40, 60, 88) abgewandten Seite der Fügelage (82, 84) anliegt und mit dieser einen Hohlraum bildet, in welchen Späne wenigstens einer Fügelage (82, 84) eingeschlossen sind, wobei die Fügelagen (82, 84) formschlüssig zwischen Kopf (12, 42, 86) und Befestigungselement (30, 50, 70, 90, 102) zusammengehalten sind, wobei das Verbindungselement (10, 40, 60, 88) gemäß einem der Ansprüche 1 bis 9 ausgebildet ist.

11. Verbindungssystem zur Verbindung mehrerer plattenartigen Bauteile umfassend ein erstes Verbindungselement (10, 40, 60, 88) mit einem Schaft (14, 44, 62), gemäß den Ansprüchen 1 bis 9 und ein Befestigungselement (30, 50, 70, 90, 102) wobei das Verbindungselement (10, 40, 60, 88) nach Durchdringen der plattenartigen Bauteile mit dem Befestigungselement (30, 50, 70, 90, 102) verschweißbar ist.

12. Verbindungssystem nach Anspruch 11, **dadurch gekennzeichnet, dass** der Durchmesser des Schweißbereichs des Befestigungselements (30, 50, 70, 90, 102) 25% größer als der Schneiddurchmesser des Verbindungselements (10, 40, 60, 88) ist.

13. Verbindungssystem nach Anspruch 12, **dadurch gekennzeichnet, dass** der Schweißbereich und die Stirnseite eine korrespondierende Gestaltung aufweisen.

## Claims

1. Connecting element (10, 40, 60, 88) for a positive connection to at least one component, said at least one component being held between said connecting element (10, 40, 60, 88) and a fastening element (30, 50, 70, 90, 102), with said connecting element (10, 40, 60, 88) and said fastening element (30, 50, 70, 90, 102) forming a friction-welded connection, comprising a head (12, 42, 86) with a drive and a shank (14, 44, 62), said shank (14, 44, 62) having at least two cutting structures (18) on its end face, said cutting structures (18) having cutting edges (46) which lie in a cutting plane, with said cutting plane delimiting said shank (14, 44, 62), said cutting structures (18) furthermore being spaced apart in the circumferential direction and defining a cutting diameter, **characterized in that** said shank (14, 44, 62) furthermore has a cross-section that is of reduced extent between said cutting structures (18) relative to the cutting diameter, with the area of reduced extent extending in the axial direction at least the length of the cutting diameter from said cutting structures (18) toward said head (12, 42, 86).

2. Connecting element according to claim 1, **characterized in that** the maximum radial extent of said cutting structures (18) in the cutting plane is not more than 25%, in particular not more than 20%, of the cutting diameter Ds.

3. Connecting element according to any one of the preceding claims, **characterized in that** the shank (14, 44, 62) has a cross-sectional area of at least 60% of the area defined by the cutting diameter Ds.

4. Connecting element according to any one of the preceding claims, **characterized in that** no more than five cutting structures (18) are provided.

5. Connecting element according to any one of the preceding claims, **characterized in that** the center of the end face of the shank (14, 44, 62) is spaced apart from the cutting plane in the direction of the head (12, 42, 86) by no more than 50% of the cutting diameter.

6. Connecting element according to any one of the preceding claims, **characterized in that** the area of reduced extent is achieved by introducing recesses, in particular grooves, in the shank.

7. Connecting element according to any one of the preceding claims, **characterized in that** the shank (14, 44, 62) is cylindrical.

8. Connecting element according to any one of the preceding claims, **characterized in that** the cutting diameter is ≤ 2.5 mm.

9. Connecting element according to any one of the preceding claims, **characterized in that** the reduced extent decreases steadily in the direction of the head (12, 42, 86).

10. Component connection (80, 100) comprising at least two joint component layers (82, 84) with a connecting element having a head (12, 42, 86) and a shank (14, 44, 62), with said shank (14, 44, 62) penetrating said joint layers (82, 84) in a driving-in direction and forming a friction-welded connection with a fastening element (30, 50, 70, 90, 102), wherein said fastening element (30, 50, 70, 90, 102) bears against the side of the component layer (82, 84) facing away from the head (12, 42, 86) of the connecting element (10, 40, 60, 88) and forms a cavity therewith in which chips of at least one component layer (82, 84) are enclosed, said component layers (82, 84) being held together in a positive locking manner between the head (12, 42, 86) and the fastening element (30, 50, 70, 90, 102), with said connecting element (10, 40, 60, 88) being of the design claimed in any one of claims 1 to 9.

11. Connecting system for connecting a plurality of plate-like components, said system comprising a first connecting element (10, 40, 60, 88) with a shank (14, 44, 62), as claimed in claims 1 to 9, and a fastening element (30, 50, 70, 90, 102) wherein said connecting element (10, 40, 60, 88) is adapted to be welded to the fastening element (30, 50, 70, 90, 102) after it has penetrated the plate-like components.

12. Connecting system according to claim 11, **characterized in that** the diameter of the welding area of the fastening element (30, 50, 70, 90, 102) is 25% larger than the cutting diameter of the connecting element (10, 40, 60, 88).

13. Connecting system according to claim 12, **characterized in that** the welding area and the end face are of a corresponding design.

## Revendications

1. Elément d'assemblage (10, 40, 60, 88) pour l'assemblage par coopération de formes avec au moins une pièce, dans lequel la au moins une pièce est retenue entre l'élément d'assemblage (10, 40, 60, 88) et un élément de fixation (30, 50, 70, 90, 102) et l'élément d'assemblage (10, 40, 60, 88) et l'élément de fixation (30, 50, 70, 90, 102) établissent une liaison de soudage par friction, présentant une tête (12, 42, 86) avec un entraînement et une tige (14, 44, 62), dans lequel la tige (14, 44, 62) présente sur sa face frontale au moins deux structures de coupe (18), dans lequel les structures de coupe (18) présentent des arêtes de coupe (46), qui se situent dans un plan de coupe, dans lequel le plan de coupe délimite la tige (14, 44, 62), dans lequel en outre les structures de coupe (18) sont espacées dans la direction périphérique et définissent un diamètre de coupe, **caractérisé en ce qu'en** outre la tige (14, 44, 62) présente une section transversale qui possède entre les structures de coupe (18) une étendue réduite par rapport au diamètre de coupe, dans lequel la zone de l'étendue réduite s'étend dans la direction axiale à partir des structures de coupe (18) en direction de la tête (12, 42, 86) au moins avec la longueur du diamètre de coupe.

2. Elément d'assemblage selon la revendication 1, **caractérisé en ce que** l'étendue radiale maximale des structures de coupe (18) atteint dans le plan de coupe au maximum 25 %, en particulier au maximum 20 %, du diamètre de coupe DS.

3. Elément d'assemblage selon l'une quelconque des revendications précédentes, **caractérisé en ce que** la tige (14, 44, 62) présente une surface de section transversale d'au moins 60 % de la surface fixée par le diamètre de coupe DS.

4. Elément d'assemblage selon l'une quelconque des revendications précédentes, **caractérisé en ce qu'au** plus cinq structures de coupe (18) sont prévues.

5. Elément d'assemblage selon l'une quelconque des revendications précédentes, **caractérisé en ce que** le centre de la face frontale de la tige (14, 44, 62) est espacé avec au maximum 50 % du diamètre de coupe du plan de coupe en direction de la tête (12, 42, 86).

6. Elément d'assemblage selon l'une quelconque des revendications précédentes, **caractérisé en ce que** la zone de l'étendue réduite est produite dans la tige par ménagement d'évidements, en particulier de rainures.

7. Elément d'assemblage selon l'une quelconque des revendications précédentes, **caractérisé en ce que** la tige (14, 44, 62) est cylindrique.

8. Elément d'assemblage selon l'une quelconque des revendications précédentes, **caractérisé en ce que** le diamètre de coupe ≤ 2,5 mm.

9. Elément d'assemblage selon l'une quelconque des revendications précédentes, **caractérisé en ce que** l'étendue réduite se réduit de manière continue en direction de la tête (12, 42, 86).

10. Assemblage de pièces (80, 100) comprenant au moins deux couches de jonction (82, 84) avec un élément d'assemblage avec une tête (12, 42, 86) et une tige (14, 44, 62), dans lequel la tige (14, 44, 62) passe à travers les couches de jonction (82, 84) dans une direction d'enfoncement et établit une liaison de soudage par friction avec un élément de fixation (30, 50, 70, 90, 102), dans lequel l'élément de fixation (30, 50, 70, 90, 102) s'applique sur la face de la couche de jonction (82, 84) opposée à la tête (12, 42, 86) de l'élément d'assemblage (10, 40, 60, 88) et forme avec celle-ci une cavité, dans laquelle sont renfermés des copeaux d'au moins une couche de jonction (82, 84), dans lequel les couches de jonction (82, 84) sont maintenues ensemble entre la tête (12, 42, 86) et l'élément de fixation (30, 50, 70, 90, 102) par coopération de formes, dans lequel l'élément d'assemblage (10, 40, 60, 88) est réalisé selon l'une quelconque des revendications 1 à 9.

11. Système d'assemblage pour l'assemblage de plusieurs pièces du type plaque comprenant un premier élément d'assemblage (10, 40, 60, 88) avec une tige (14, 44, 62) selon les revendications 1 à 9 et un élément de fixation (30, 50, 70, 90, 102), dans lequel l'élément d'assemblage (10, 40, 60, 88) peut être soudé avec l'élément de fixation (30, 50, 70, 90, 102) après avoir traversé les pièces du type plaque.

12. Système d'assemblage selon la revendication 11, **caractérisé en ce que** le diamètre de la zone de soudage de l'élément de fixation (30, 50, 70, 90, 102) est 25 % plus grand que le diamètre de coupe de l'élément d'assemblage (10, 40, 60, 88).

13. Système d'assemblage selon la revendication 12, **caractérisé en ce que** la zone de soudage et la face frontale présentent une configuration correspondante.
